# EUROPÄISCHE PATENTSCHRIFT

(11) **EP 3 088 314 B1**
(45) Veröffentlichungstag und Bekanntmachung des Hinweises auf die Patenterteilung: **14.11.2018**
(21) Anmeldenummer: 15165943.0
(22) Anmeldetag: 30.04.2015
(51) Int. Cl.: B65B 57/18, B65B 65/00, F16M 1/00, G08B 5/36, G07C 3/00

(54) **VERPACKUNGSMASCHINE MIT ZUMINDEST EINEM TEILWEISEN GEHÄUSE UND LICHTEFFEKTEN AM GEHÄUSE FÜR HINWEISE FÜR DAS BEDIENPERSONAL**
PACKAGING MACHINE WITH AT LEAST A PARTIAL ENCLOSURE AND LIGHTING EFFECTS ON THE HOUSING FOR INSTRUCTIONS FOR THE OPERATING PERSONNEL
LA MACHINE D'EMBALLAGE AVEC AU MOINS PARTIELLES EFFETS DE L'ENCEINTE ET DE L'ÉCLAIRAGE SUR LE BOÎTIER POUR OBTENIR DES INSTRUCTIONS POUR LE PERSONNEL D'EXPLOITATION

(43) Veröffentlichungstag der Anmeldung: 02.11.2016
(73) Patentinhaber: J+P Maschinenbau GmbH, 01731 Kreischa-Sobrigau (DE)
(72) Erfinder: Jensen, Ulli, 01731 Kreischa-Sobrigau (DE); Endt, Jörg, 01731 Kreischa-Sobrigau (DE)
(74) Vertreter: Weissfloh, Ingo

(56) Entgegenhaltungen:
- EP-A1- 0 940 343
- EP-A2- 2 762 763
- DE-A1- 3 304 052
- DE-A1-102014 100 271
- DE-U1-202015 000 059

## Beschreibung

Verpackungsmaschine mit zumindest einem teilweisen Gehäuse und Lichteffekten am Gehäuse für Hinweise für das Bedienungspersonal vorzugsweise in Form von unterschiedlich farbigen Lichtbändern.

Zur Signalisierung von stillstehenden Maschinen aufgrund von aufgetretenen Fehlern oder besonderen Zuständen an der Maschine, die das Einschreiten des Bedienungspersonals notwendig macht, werden derzeit Rundumleuchten eingesetzt. Ansonsten ist die Anwendung von Lichtsignalen in Verpackungsmaschinen auf die Überwachung einzelner Arbeitsgänge beschränkt. So sind in der DE 101 14 201 A1 LEDs eingesetzt, um das Ende einer Vorwärmzeit eines Heizelementes anzuzeigen.

In der DE 10 2008 022 155 A1 wird unter anderem ein Verfahren beschrieben, der Lichtstrahlen zur Projizierung von Hinweisen auf der jeweiligen Verpackung benutzt, ob zum Beispiel in die Verpackung noch ein weiterer Inhalt einzufügen ist. Eine ähnliche Verpackungsmaschine ist in der Schrift DE 10 2012 004 565 A1 beschrieben, die zum Beispiel LEDs als Anzeige nutzt, die Informationen darüber enthält, wie die Anzahl des Verpackungsgutes bei einer fehlerhaften Anzahl des Verpackungsgutes verändert werden muss. Alle diese Lösungen dienen dazu, mögliche Fehlerstellen innerhalb der Maschine anzuzeigen.

In der DE 10 2005 038 718 B3 wird eine Verpackungsmaschine beschrieben, die eine sehr große Ausdehnung besitzt und mit mehreren Eingabeeinheiten versehen ist und somit es dem Bedienungspersonal ermöglicht, die Wirkung seines Eingriffs zu beobachten und zu bewerten. Eine weitere ganz bevorzugte Ausführungsform ist dadurch gekennzeichnet, dass Sensoren, Kameras oder Detektoren zur Überprüfung des Betriebszustandes der Stationen und der Kontrolle der Arbeitsabläufe und der Produkte vorgesehen sind, deren Daten in die Recheneinheit eingespeist wird und auf einem Bildschirm darstellbar sind. Damit ergibt sich die Möglichkeit, dass Störungsmeldungen direkt an der Stelle ihres Auftretens angezeigt werden, also der Bediener zugleich einen Überblick über den Prozess, den Sensor oder die vom Sensor erfassten Daten erhält. So können auch fehlerhafte Produkte auf dem Bildschirm visualisiert werden, insbesondere aus einem Blickwinkel, der sonst dem Bediener nicht zur Verfügung steht. Hierdurch sollen insbesondere die Wege des Bedienungspersonals wesentlich reduziert werden.

Die DE 20 2015 000 059 U1 beschreibt eine Verpackungsmaschine, bei der durch eine dezentrale Anordnung von Steuergeräten sowie eine dezentrale Leistungsverteilung der Verkabelungsaufwand erheblich minimiert werden kann. Die dezentrale Anordnung der Steuergeräte ermöglicht den Ort eines Defektes, einer Fehlermeldung einer Störmeldung oder dergleichen unmittelbar einem Steuergerät zuzuordnen und mittels eines Leuchtkörpers an der jeweiligen Verarbeitungsstation anzuzeigen. In oder an den Verarbeitungsstation kann ein sich in deren Längsachse erstreckender Leuchtkörper angeordnet sein. Vorzugsweise erstreckt sich der Leuchtkörper ein oder mehrstückig entlang der gesmten Längsachse der Verarbeitungsstation bzw. aller Verarbeitungsstationen. Leuchtmittel des Leuchtkörpers können einer Verarbeitungsstation oder einem Steuergerät zugeordnet sein. Es ist möglich, ein Leuchtmittel des Leuchtkörpers derart anzusteuern, dass es der Verarbeitungsstation oder dem Steuergerät zugeordnet ein- und ausschaltbar ist. Hiermit kann ein Defekt entlang der Längsachse des Leuchtkörpers dem Ort zugeordnet angezeigt werden, an welchem dieser detektiert wurde. Aufgabe der Erfindung ist es, außerhalb und innerhalb einer Verpackungsmaschine durch Nutzung von Lichteffekten an der Verpackungsmaschine das Bedienungspersonal schnell und sicher an die Stelle der Verpackungsmaschine zu führen, an der ein Fehler aufgetreten ist oder eine Warnung ausgelöst wurde und gleichzeitig die dazu vorteilhaften konstruktiven Lösungen an der Verpackungsmaschine zu schaffen.

Die mit der Erfindung erzielbaren Vorteile bestehen insbesondere darin, dass für das Bedienungspersonal, welches mehrere Verpackungsmaschinen betreuen muss, ein optischer Hinweis an der Verpackungsmaschine sinnvoll ist, welche Maschine aufgrund von Fehlern stillsteht und an welcher Station dieser Maschine ein Fehler aufgetreten ist bzw. Warnhinweise gegeben werden, um z.B. zu Ende gehendes Material zu ergänzen. Dies wird erfindungsgemäß durch ein Aufleuchten eines Lichtbandes oder mehrerer Lichtbänder an der Verpackungsmaschine realisiert. So signalisiert zum Beispiel ein Lichtband ringsum um die Verpackungsmaschine einen Stillstand, wobei an der Station, an der der Fehler aufgetreten ist, das Lichtband intervallmäßig aufleuchtet. Durch das Aufleuchten farblich unterschiedlicher Lichtbänder kann auf bestimmte Fehlersituationen hingewiesen werden bzw. Warnungen vorgenommen werden, zum Beispiel ein gelbes Lichtband für wenig Verpackungsmaterial an der entsprechenden Station als Warnhinweis und ein rotes Lichtband für einen Stillstand der Verpackungsmaschine mit einem blinkenden Lichtband an der fehlerhaften Station. Durch die Kombination verschiedener farblich unterschiedlicher Lichtbänder kann eine Vielzahl konkreter Hinweise an das Bedienungspersonal gegeben werden.

Die erfindungsgemäße Verpackungsmaschine und vorteilhafte Ausgestaltungen der Erfindung sind in den Ansprüchen 1 bis 5 beschrieben. Die freistehenden Portale der Verpackungsmaschine können im oberen Bereich beider Portale an ihren beiden Ecken Verbindungselemente besitzen.

Bei der Weiterbildung nach Anspruch 2 sind die Leuchtelemente als Lichtbänder ausgebildet, vorzugsweise LED-Bänder. Die Lichtbänder können unterschiedliche Farben als Dauerlicht, in bestimmten Intervallen oder in einer Art Richtungsbewegung ausstrahlen, d.h. es können einzelne Lichtpunkte in eine Richtung laufen oder das Lichtband nimmt in einer Richtung intervallmäßig an Länge zu. Die Lichtbänder sind in ihrer Länge vorteilhaft der zugehörigen Station angepasst.

Nach Anspruch 3 sind zwischen den Trägern des Portals durchsichtige und/oder undurchsichtige, flächenhafte Abdeckungen und durchsichtige Türen vorgesehen, wobei die durchsichtigen Flächen und Türen seitlich einstrahlende LEDs besitzen. Bei entsprechenden Gravuren der Abdeckungen können farbig unterschiedliche und flächenhafte Ausleuchtungen erfolgen.
Durch die Auftrennung des horizontalen Trägers des Portals am Gehäuse in mehrere Einzelträger nach Anspruch 4 entstehen Hohlräume, die für unterschiedlichste Details der Maschine genutzt werden können, so zum Beispiel für Kabelträger. Diese Träger werden vorteilhafterweise in Richtung Außenseite der Maschine mit Abdeckblechen versehen.

An diese Abdeckbleche können die Leuchtelemente und/oder Lichtbänder befestigt werden. Es ist jedoch auch denkbar dass die Leuchtelemente oder Lichtbänder an den untersten, horizontalen Trägern befestigt sind.

Die erfindungsgemäße innenliegende Rahmenkonstruktion ist flächenhaft kleiner als die Grundfläche zwischen beiden Portalen ausgebildet. Von der innenliegenden Rahmenkonstruktion zu den Portalen und zu allen Scharnierseiten von Türen führen Verbindungsprofile. Durch die zurückgesetzte innenliegende Rahmenkonstruktion, entstehen insbesondere in den Türbereichen freie Trittflächen für das Bedienungspersonal, die beim Öffnen der Tür durch die Leuchtelemente an den horizontalen Trägern bzw Abdeckblechen extra ausleuchtbar sind. Dies dient zur zusätzlichen Sicherheit des Bedienungspersonals. Außerdem wird ein weites Hinüberbeugen mit dem Oberkörper in Richtung einer notwendigen Bedienerarbeit vermieden.

Von der innenliegenden Rahmenkonstruktion führen Verbindungsprofile zu Maschinenteilen der Verpackungsmaschine, die von Leuchtelementen anleuchtbar sind. Diese Verbindungsprofile dienen zur Stabilität der Maschine, sind jedoch Gefahrenpunkte für das Bedienpersonal. Durch das Anstrahlen dieser Teile wird auf Gefahrstellen hingewiesen.

Bei der Weiterbildung nach Anspruch 5 besitzen die Türen im unteren Drittel eine rechteckige Profilversteifung und einen von der Oberkante zur Unterkante durchgängigen Griff, wobei der Griff im Griffbereich des Bedienpersonals eine Auswölbung besitzt, vorzugsweise in der Form, dass der Griff sich im Winkel von 20 Grad zur Türfläche abhebt, dann parallel zur Türfläche verläuft und anschließend wieder im Winkel von 20 Grad zur Türfläche zurückkehrt. Die Auswölbung des Griffs besitzt Kontaktelemente und der gesamte Griff innenliegende Lichtbänder. Durch die Kontaktelemente können zum Beispiel Leuchtelemente zusätzlich eingeschaltet werden, die entsprechende Bereiche innerhalb der Maschine zusätzlich beleuchten. Die Lichtbänder im Griff haben die gleiche Funktion wie die vorher beschriebenen Lichtbänder.

Ein Ausführungsbeispiel der Erfindung ist in den Zeichnungen dargestellt und wird im Folgenden näher beschrieben. Es zeigen:

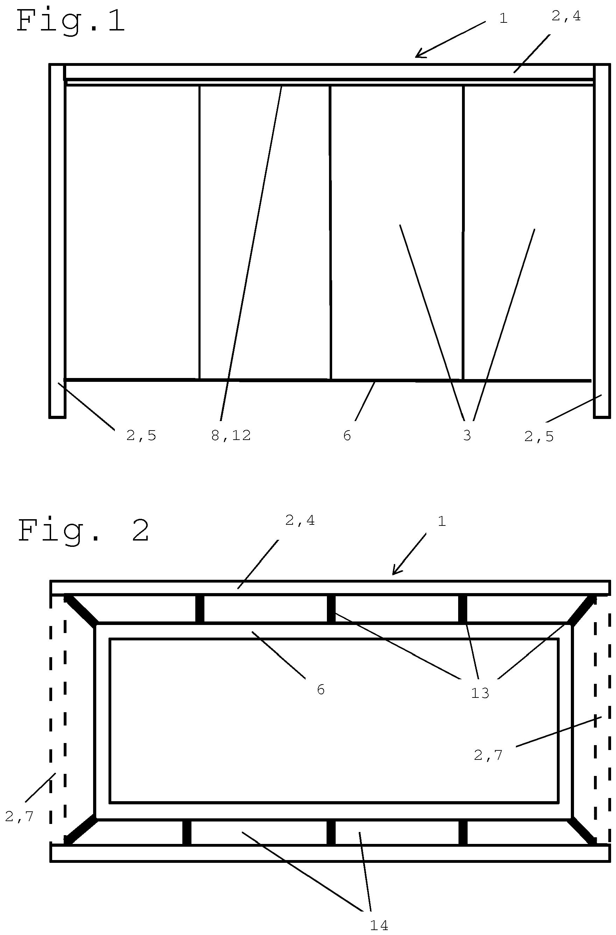

Fig. 1 die Seitenansicht einer Verpackungsmaschine mit einem Rahmengestell in Form eines Portals und die Verpackungsmaschine unterteilt in vier Stationen,
Fig. 2 die Draufsicht auf eine Verpackungsmaschine mit Rahmengestell und innenliegender Rahmenkonstruktion und

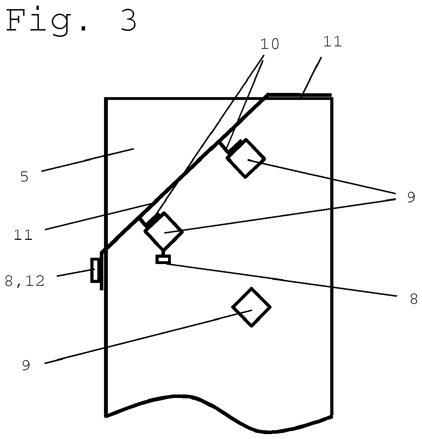

Fig. 3 den Schnitt durch den horizontalen Träger in Form von drei Vierkantprofilen, Kabelkanälen und einem Abdeckblech mit Leuchtelementen.

Die Verpackungsmaschine 1 besitzt zumindest ein teilweises Gehäuse in Portalform und am Gehäuse angebrachte Lichtbänder 12, vorzugsweise mit unterschiedlich farbigen Lichteffekten zur Ortung von Maschinenstillstandsgründen oder allgemeinen Maschinenzuständen. An der Vorderseite und an der Rückseite der Verpackungsmaschine 1 befindet sich ein freistehendes Portal. Jedes Portal besteht aus einem horizontalen Träger 4 und zwei vertikalen Trägern 5. Im oberen Bereich können beide Portale an ihren beiden Ecken Verbindungselemente 7 besitzen. Beide Portale umfassen in ihrer Ausdehnung alle Teile der Verpackungsmaschine. Zwischen beiden Portalen befindet sich im unteren Bereich eine innenliegende Rahmenkonstruktion 6. Im oberen Bereich der Portale und zwischen den Portalen ringsum um die gesamte Verpackungsmaschine 1 sind Leuchtelemente 8, vorzugsweise Lichtbänder 12, angeordnet. Die Lichtbänder 12 sind vorzugsweise abschnittsweise dahinterliegenden bzw. darunterliegenden Stationen 3 angepasst und zugeordnet.

Die innenliegende Rahmenkonstruktion 6 ist flächenhaft kleiner als die Grundfläche zwischen beiden Portalen. Von der innenliegenden Rahmenkonstruktion 6 führen zu den Portalen und zu allen Scharnierseiten von Türen Verbindungsprofile 13.

Somit entstehen insbesondere in den Türbereichen freie Trittflächen 14 für das Bedienungspersonal. Beim Öffnen einer Tür werden durch die Leuchtelemente 8 an den horizontalen Trägern 4 bzw. Vierkantprofilen 9 oder an den Abdeckblechen 11 diese Trittflächen 14 beleuchtet. Durch diese Trittflächen 14 ist es dem Bedienpersonal leichter Fehler an der Verpackungsmaschine 1 zu beseitigen, da es näher zur Fehlerstelle treten kann. Außerdem wird das Anstoßen an Maschinenteilen mit dem Schienbein weitestgehend vermieden.

Der horizontale Träger 4 kann auch aus zwei, vorzugsweise drei Vierkantprofilen 9 bestehen. Diese Vierkantprofile 9 sind vorteilhaft zueinander dreieckförmig angeordnet. In Abständen sind diese Vierkantprofile 9 durch Platten oder Hohlprofile miteinander verbunden. Die Vierkantprofile 9 tragen Kabelkanäle 10 und in Richtung Außenseite der Verpackungsmaschine 1 Abdeckbleche 11. Diese Abdeckbleche 11 tragen Leuchtelemente 8 oder Lichtbänder 12.

Die Lichtbänder 12, vorzugsweise LED-Bänder 12, können unterschiedliche Farben als Dauerlicht, in bestimmten Intervallen oder in einer Art Richtungsbewegung ausstrahlen. In ihrer Länge sind sie der zugehörigen Station 3 angepasst. Diese Lichtbänder 12 sind durch ihre Anordnung ringsum um die gesamte Verpackungsmaschine 1 auch in Entfernung durch das Bedienungspersonal sehr gut einzusehen und signalisieren bestimmte Maschinenzustände. So signalisiert zum Beispiel ein gelbes Lichtband 12 als Warnsignal, dass nur noch wenig Verpackungsmaterial der Verpackungsmaschine 1 zur Verfügung steht. Im Bereich der Verpackungsmaterialstation blinkt das gelbe Lichtband 12. Bei einem Fehler, der die Verpackungsmaschine 1 zum Stillstand brachte, wie zum Beispiel eine fehlerhafte Füllung der Verpackung, zeigt ein rotes Lichtband 12 den Fehler an, wobei an der Station 3, wo der Fehler auftrat, das rote Lichtband 12 blinkt.

Der Lichteffekt der Lichtbänder 12 kann auch in Form einer Bewegungsrichtung ausgeführt sein. Hierzu werden immer wieder neue LEDs in Richtung der fehlerhaften Station 3 zugeschaltet oder der fehlende Lichteffekt einer ausgeschalteten LED bewegt sich in Richtung der fehlerhaften Station 3 bzw. einer Station 3 mit einem Warnhinweis.

Die Lichtbänder 12 können so ausgeführt sein, dass innerhalb eines Lichtbandes 12 verschiedene Farben auswählbar sind und somit ausgesendet werden können. Die Lichtbänder 12 können aber auch so ausgeführt sein, dass nur eine Farbe ausgesendet werden kann. In diesem Fall werden mehrere Lichtbänder 12 parallel am Maschinengehäuse befestigt.

Zwischen den Trägern 4 und 5 der Portale können durchsichtige und/oder transparente, flächenhafte Abdeckungen und vor allem durchsichtige Türen vorgesehen sein. Alle durchsichtigen Flächen und Türen können seitlich einstrahlende LEDs besitzen, die Gravuren/Symbole in den Abdeckungen zum Leuchten bringen und somit auch Hinweise auf den Maschinenzustand ermöglichen.

Alle Türen besitzen im unteren Drittel eine rechteckige Profilversteifung und einen von der Oberkante zur Unterkante durchgängigen Griff. Der Griff im Griffbereich für das Bedienungspersonal besitzt eine Auswölbung. An dieser Auswölbung können Kontaktelemente angeordnet sein, die zusätzliche Leuchtelemente 8 bei Betätigung einschalten können. Der gesamte Griff kann ein innenliegendes Lichtband 12 besitzen, welches bei einer bestimmten Maschinensituation aufleuchtet und somit Hinweise an das Bedienungspersonal geben kann.

### Zusammenstellung der Bezugszeichen

- 1 -: Verpackungsmaschine
- 2 -: Rahmengestell
- 3 -: Station
- 4 -: horizontaler Träger
- 5 -: vertikaler Träger
- 6 -: innenliegende Rahmenkonstruktion
- 7 -: Verbindungselemente
- 8 -: Leuchtelemente
- 9 -: Vierkantprofile
- 10 -: Kabelkanäle
- 11 -: Abdeckblech
- 12 -: Lichtbänder, LED-Bänder
- 13 -: Verbindungsprofile
- 14 -: Trittflächen

## Patentansprüche

1. Verpackungsmaschine (1) mit zumindest einem teilweisen Gehäuse mit Rahmengestell (2), mit einer Mehrzahl von Stationen (3), zum Beispiel zur Verarbeitung von Produkten und/oder Verpackungen und zur Aufnahme von Produkten in Verpackungen und mit einem den Innenraum der Verpackungsmaschine verlassenden Abförderbereich,
wobei
das Rahmengestell (2) an der Vorderseite und an der Rückseite der Verpackungsmaschine (1) jeweils als freistehendes Portal, bestehend aus einem horizontalen Träger (4) und zwei vertikalen Trägern (5), ausgebildet ist, welche in ihrer Ausdehnung alle Teile der Verpackungsmaschine (1) umfassen, wobei beide Portale im unteren Bereich durch eine innenliegende Rahmenkonstruktion (6) verbunden sind und die Rahmenkonstruktion (6) eine kleinere Grundfläche als die durch die Standfläche der Portale gebildete Grundfläche besitzt und wobei im oberen Bereich der Portale und zwischen den Portalen ringsum um die gesamte Verpackungsmaschine (1) als Lichtbänder (12) ausgebildete Leuchtelemente (8) angeordnet sind, die jeweils abschnittsweise dahinterliegenden oder darunterliegenden Stationen (3) zugeordnet sind, wobei die Verpackungsmaschine (1) derart konfiguriert ist, dass anhand des jeweiligen Lichtbandes (12) signalisierbar ist, an welcher der Stationen (3) ein Fehler oder eine Warnung aufgetreten ist und gleichzeitig ringsum um die
Verpackungsmaschine (1) mit den restlichen Signalbändern (12) ein Fehler oder eine Warnung mit einem anderen Signal als das Signal an der Station (3) signalisierbar ist.

2. Verpackungsmaschine (1) nach Anspruch 1,
**dadurch gekennzeichnet,**
**dass** mehrere Lichtbänder (12) parallel am Maschinengehäuse angeordnet, wobei
die Lichtbänder so ausgeführt sind, dass nur eine Lichtfarbe aussendbar ist oder unterschiedliche Farben aussendbar sind und der Lichtaustritt
als Dauerlicht, in bestimmten Intervallen oder in einer Art Richtungsbewegung möglich ist.

3. Verpackungsmaschine (1) nach einem der vorhergehenden Ansprüche,
**dadurch gekennzeichnet,**
**dass** zwischen den Trägern (4, 5) des Portals durchsichtige und/oder undurchsichtige, flächenhafte Abdeckungen und durchsichtige Türen vorgesehen sind, wobei die durchsichtigen Flächen und Türen seitlich einstrahlende LEDs und die durchsichtigen Flächen und Türen Symbolgravuren besitzen.

4. Verpackungsmaschine (1) nach einem der vorhergehenden Ansprüche,
**dadurch gekennzeichnet,**
**dass** der horizontale Träger (4) aus zwei, vorzugsweise drei Vierkantprofilen (9) besteht, die dreiecksförmig zueinander angeordnet sind, in Abständen durch Platten oder Hohlprofile miteinander verbunden sind, Kabelkanäle (10) tragen und in Richtung Außenseite der Verpackungsmaschine (1) mit Abdeckblechen (11) verkleidet sind und diese Abdeckbleche (11) die Leuchtelemente (8) und/oder zusätzlich die Vierkantprofile (9) Leuchtelemente (8) tragen.

5. Verpackungsmaschine (1) nach einem der vorhergehenden Ansprüche,
**dadurch gekennzeichnet,**
**dass** die Türen im unteren Drittel eine rechteckige Profilversteifung und einen von der Oberkante zur Unterkante durchgängigen Griff besitzen, wobei der Griff im Griffbereich des Bedienpersonals eine Auswölbung besitzt, vorzugsweise in der Form, dass der Griff sich im Winkel von 20 Grad zur Türfläche abhebt, dann parallel zur Türfläche verläuft und anschließend wieder im Winkel von 20 Grad zur Türfläche zurückkehrt, wobei die Auswölbung des Griffs Kontaktelemente und der gesamte Griff innenliegende Lichtbänder (12) besitzt, welche so konfiguriert sind, dass bei bestimmten Maschinensituationen die Lichtbänder (12) aufleuchtbar sind und somit Hinweise an das Bedienungspersonal übermittelbar sind und durch die Kontaktelemente bei Betätigung durch das Bedienpersonal zusätzliche Leuchtelemente (8) einschaltbar sind.

## Claims

1. Packaging machine (1) with at least a partial housing with rack (2), with several stations (3), for example, for the processing of products and/or packaging and the accommodation of products in packaging and with a discharge area leaving the interior or the packaging machine,
whereby
The rack (2) at the front and the rear of the packaging machine (1) is formed in each case as free-standing gantry, consisting of a horizontal beam (4) and two vertical beams (5), which in their extent encompass all parts of the packaging machine (1), whereby both gantries are connected in the lower area through an internal frame structure (6) and the frame structure (6) has a smaller base than the base formed by the footprint of the gantries and whereby in the upper area of the gantries and between the gantries lighting elements (8) designed as light bands (12) are arranged around the entire packaging machine (1), which are each assigned section by section to stations (3) behind or below them , whereby the packaging machine (1) is configured in a manner that it can signal via the respective light band (12) at which of the stations (3) an error or a warning has occurred and where at the same time the remaining signal bands (12) can be used to signal an error or warning with a different signal than the signal at the station (3).

2. Packaging machine (1) according to claim 1,
**characterised in that**
several light bands (12) are arranged parallel to the machine housing, whereby the light bands area designed so that only one light colour can be emitted and the exit of light is possible as continuous light, at certain intervals or resembling a directional movement.

3. Packaging machine (1) according to one of the previous claims,
**characterised in that**
between the beams (4, 5) of the gantry transparent and/or opaque extensive covers and transparent doors are provided, whereby the transparent surfaces and doors are equipped with LEDs irradiating from sides and the transparent surfaces and doors feature symbol engravings.

4. Packaging machine (1) according to one of the previous claims,
**characterised in that**
the horizontal beam (4) consists of two, preferably three, square profiles (9) which are arranged toward each other in triangular fashion, connected at distances by plates or hollow profiles, carrying cable ducts (10) and enclosed toward the outside of the packaging machine (1) with cover sheets (11) and these cover sheets carry the lighting elements (8) and/or, in addition, the square profiles (9) lighting elements (8).

5. Packaging machine (1) according to one of the previous claims,
**characterised in that**
the doors in the lower third have a rectangular profile reinforcement and a handle running from the top edge to the bottom edge, whereby the handle has a bulge in the gripping area of the operating personnel in the form that the handle lifts off the door surface at an angle of 20 degree, then runs parallel to the door surface and finally returns again at an angle of 20 degree to the door surface, whereby the bulge of the handle has contact elements and the entire handle has inside light bands (12) which are configured so that at certain machine situations the light bands (12) may light up thus able to give information to the operating personnel and the contact elements can switch on additional lighting elements (8) by the operating personnel.

## Revendications

1. Machine d'emballage(1) avec au moins un carter partiel avec bâti (2), avec plusieurs stations (3), par exemple pour le traitement de produits et/ou d'emballages et pour la réception de produits dans des emballages et avec une zone de décharge quittant l'intérieur de la machine d'emballage,
sachant que
le bâti (2) est réalisé sur le devant et au dos de la machine d'emballage(1) sous forme de portique indépendant comprenant un support horizontal(4) et deux supports verticaux (5), lesquels regroupent dans leur extension toutes les pièces de la machine d'emballage (1), sachant que deux portiques sont reliés dans la zone inférieure par une construction de châssis (6) à l'intérieur et que la construction de châssis (6) possède une surface de base plus petite que la surface de base formée par la surface d'installation des portiques et sachant que dans la partie supérieure des portiques entre les portiques, des éléments lumineux (8) sont disposés sous forme de bandes lumineuses (12) tout autour de la machine d'emballage complète, et que ces éléments lumineux (8) sont chacun attribués par intervalles aux stations se trouvant derrière ou en dessous (3), sachant que la machine d'emballage (1) est configurée de façon à pouvoir signaler, à l'aide de la bande lumineuse correspondante (12), sur laquelle des stations (3) une erreur ou un avertissement est survenu(e), et à pouvoir signaler simultanément, tout autour de la machine d'emballage (1), avec les bandes lumineuses restantes (12), qu'une erreur ou un avertissement est survenu(e) avec un autre signal que celui de la station (3).

2. Machine d'emballage(1) selon la revendication 1,
**caractérisée en ce que**
plusieurs bandes lumineuses (12) sont disposées en parallèle sur le carter de la machine, sachant que les bandes lumineuses sont conçues de façon à ce qu'une seule couleur puisse être émise ou que différentes couleurs puissent être émises et que la sortie de lumière soit possible sous forme de lumière continue, avec certains intervalles ou avec une sorte de mouvement directionnel.

3. Machine d'emballage (1) selon l'une des revendications précédentes,
**caractérisée en ce que**
des revêtements de surface transparents et/ou opaques ainsi que des portes transparentes sont prévus entre les supports (4, 5) du portique, sachant que les surfaces et les portes transparentes possèdent des LED éclairant sur le côté ainsi que des gravures de symboles.

4. Machine d'emballage (1) selon l'une des revendications précédentes,
**caractérisée en ce que**
le support horizontal (4) est composé de deux, de préférence trois profils carrés (9) qui sont placés les uns par rapport aux autres en triangle, assemblés par intervalles par des plaques ou des profils creux, portent des conduits de câbles (10) et sont habillés de tôles de protection (11) vers le côté extérieur de la machine d'emballage (11) et que ces tôles de protection (11) portent les éléments lumineux (8) et/ou que les profils carrés (9) portent aussi des éléments lumineux (8).

5. Machine d'emballage (1) selon l'une des revendications précédentes,
**caractérisée en ce que**
les portes sont dotées dans le tiers inférieur d'un renforcement rectangulaire du profil et d'une poignée continue du bord supérieur au bord inférieur, sachant que la poignée possède un renflement dans la zone de saisie du personnel de service, de préférence avec une forme permettant que la poignée se soulève à un angle de 20 degrés par rapport à la surface de la porte, puis soit parallèle à la surface de la porte, avant de revenir à un angle de 20 degrés par rapport à la surface de la porte, sachant que le renflement de la poignée possède des éléments de contact et que l'ensemble de la poignée soit dotée de bandes lumineuses à l'intérieur (12), lesquelles sont configurées de façon à ce que, dans certaines situations, les rubans lumineux (12) puissent s'éclairer et donner ainsi des indications au personnel de service et à ce qu'avec les éléments de contact, des éléments lumineux supplémentaires (8) puissent être activés en cas d'actionnement par le personnel de service.
